# EUROPÄISCHE PATENTSCHRIFT

(11) **EP 0 587 001 B1**
(45) Veröffentlichungstag und Bekanntmachung des Hinweises auf die Patenterteilung: **18.12.1996**
(21) Anmeldenummer: 93113810.1
(22) Anmeldetag: 30.08.1993
(51) Int. Cl.: B66B 7/12, F16N 7/00

(54) **Seilschmiereinrichtung für Aufzüge**
Rope lubrication device for elevators
Appareil de graissage de câbles d'un ascenseur

(30) Priorität: 09.09.1992 CH 2834/92
(43) Veröffentlichungstag der Anmeldung: 16.03.1994
(73) Patentinhaber: INVENTIO AG, CH-6052 Hergiswil NW (CH)
(72) Erfinder: Waeldchen, Hartmut, D-52642 Alpenrod (DE)

(56) Entgegenhaltungen:
- EP-A- 0 080 423
- WO-A-91/02189
- DE-C- 318 111

## Beschreibung

Seilschmiereinrichtung in der Form eines fest oder temporär installierten Schmierstoffsprühapparates mit welchem mittels eines kontinuierlich ablaufenden Prozesses unter Druck ein Schmierstoff an Aufzugsseile gesprüht und verteilt wird.

Das Schmieren von Aufzugsseilen dient einerseits der notwendigen Pflege dieses wichtigen Bauteiles zwecks Verhinderung von Korrosionschäden und Verlängerung der Standzeit und bestimmt anderseits gewisse physikalische Eigenschaften wie Reibung und Flexibilität.

In der einfachsten Form erfolgt das Schmieren der Aufzugsseile von Hand mittels Pinsel und/oder schmierstoffgetränktem Lappen bzw. schwammartigen Gebilden. Eine rationellere Erledigung der Seilschmierung wird mit Hilfe von zu diesem Zweck konstruierten Apparaten ermöglicht.

Gemäss der französischen Patentanmeldung Nr. 2 650 366 ist eine Vorrichtung bekannt, mit welcher mehrere Seile gleichzeitig geschmiert werden können. Die zu schmierenden Seile werden durch einen zweiteiligen auf- und zuklappbaren Kasten geführt, dessen obere und untere Durchtrittsöffnung je zwei, die Seile berührende Bürstenreihen aufweist. In der Mitte einer Seitenwand ist eine elektrisch betriebene Sprühpistole angebaut. Beim Betätigen der Sprühpistole wird Schmierstoff in das Kasteninnere gesprüht, wobei ein Schmierstoffnebel entsteht und wobei sich der Schmierstoff an allen Oberflächen, auch auf den Seilen, niederschlägt. Beim Durchziehen der Seile durch den Kasten wird beim Austritt der Seile aus dem Kasten mittels der Bürstenreihen überflüssiger Schmierstoff abgestreift bzw. besser auf der Oberfläche der Seile verteilt.

Als Nachteil dieser Einrichtung könnte angesehen werden, dass nicht alle Seile gleichmässig geschmiert werden, weil der Sprühstrahl nur die mittleren Seile direkt trifft und dass dass der Schmiervorgang selbst nicht beobachtbar ist.

Der vorliegenden Erfindung liegt die Aufgabe zugrunde, eine Seilschmiereinrichtung zu schaffen, mit welcher alle Seile zwangsläufig gleichmässig geschmiert werden, mit welcher der Schmiervorgang laufend beobachtbar ist und welche leicht installierbar und anwendbar ist.

Diese Aufgabe wird durch die in den Ansprüchen gekennzeichnete Erfindung gelöst, indem eine Sprühgabel mit auf die einzelnen Seile gerichteten Sprühdüsen verwendet wird und indem zusätzlich die Seile umschliessende, den Schmierstoff verteilende Walzen vorgesehen sind.

Durch die Erfindung erreichte Vorteile bestehen darin, dass durch eine offene Konstruktion der Schmiervorgang laufend beobachtbar ist, dass alle Seile absolut gleichmässig geschmiert werden und dass die ganze Einrichtung einfach und billig herzustellen und anzuwenden ist.

In den Zeichnungen ist ein Ausführungsbeispiel dargestellt und zwar zeigen
Fig. 1 eine Draufsicht auf die Schmiereinrichtung,
Fig. 2 eine Seitenansicht auf die Schmiereinrichtung und
Fig. 3 einen Querschnitt durch die Schmiereinrichtung.

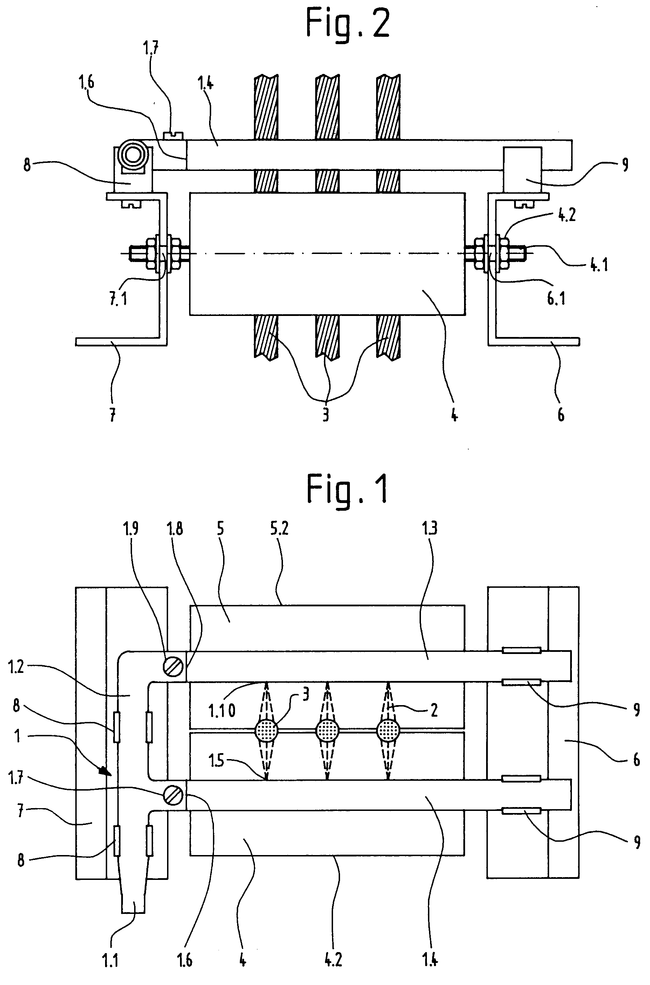

In der Fig. 1 sieht man von oben eine Sprühgabel 1 bestehend aus einem Anschluss-Stutzen 1.1, einem anschliessenden Zuführ-Rohrstück 1.2, einer vor der Mitte des Zuführ-Rohrstückes 1.2 nach rechts abzweigenden ersten Dreh-Steck-Verbindung 1.6 mit einer Feststellschraube 1.7, einer am Ende des Zuführ-Rohrstückes 1.2 nach rechts abgehenden zweiten Dreh-Steck-Verbindung 1.8 mit einer Feststellschraube 1.9, ein vorderes, von der ersten Dreh-Steck-Verbindung 1.6 abgehendes, gerade und parallel und vorn an Aufzugsseilen 3 vorbeiführendes Sprührohr 1.4, mit in Richtung der Seile 3 gerichteten Sprühdüsen 1.5 und ein hinteres, von der zweiten Dreh-Steck-Vorrichtung 1.8 hinten abgehendes, hinten, gerade und parallel an den Aufzugsseilen 3 vorbeiführendes Sprührohr 1.3 mit in Richtung der Seile gerichteten Sprühdüsen 1.10. Die Sprühgabel 1 ist links in zwei Rohrclips 8 und rechts, je am Ende der Sprührohre 1.3 und 1.4 mit Rohrclips 9 gehalten. Die Rohrclips 8 sind auf einem linken Support 7 und die Rohrclips 9 auf einem rechten Support 6 befestigt. Die von den Sprühdüsen 1.5 und 1.10 austretenden, auf die Aufzugsseile gerichteten Sprühstrahlen sind mit 2 bezeichnet. Die Teile 4 und 5 sind Verteilwalzen mit einer weichen, schmierstoffaufsaugenden Oberfläche 4.2 und 5.2 und sind vor und hinter den Aufzugsseilen 3 angeordnet und soweit an diese zugestellt, dass ihre weichen Oberflächen die Aufzugsseile 3 umschliessen.

In der Fig. 2 ist ersichtlich dass der linke Support 7 und der rechte Support 6 je aus einem ungleichschenkligen U-Profil bestehen, wobei der obere horizontale Schenkel kürzer ist als der untere auf einer nicht gezeigten Unterlage aufliegende, horizontale Schenkel. Etwas über der halben Höhe im vertikalen Teil der Supports 6 und 7 ist je in einem vorderen Schlitz 6.1 und 7.1 eine Verteilrollenachse 4.1 mit Muttern 4.2 befestigt.

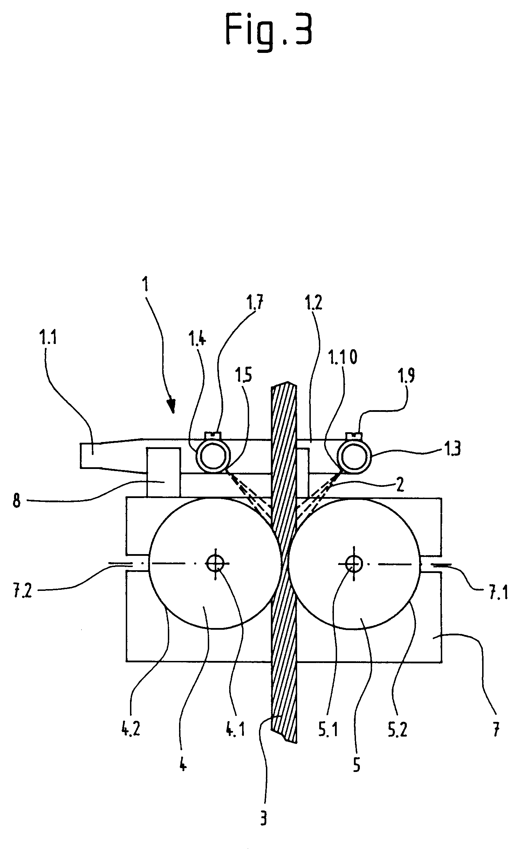

In der Fig. 3 sind im Querschnitt weitere Einzelheiten der Einrichtung ersichtlich. Die im Support 7 ausgesparten Schlitze 7.1 rechts und 7,2 links sind zur Aussenkante hin des Support 7 offen und sind horizontal nach innen so weit eingefräst, dass die Verteilrollen 4 und 5 ganz an die Aufzugsseile 3 zugestellt werden können. Die Sprühstrahlen 2 bzw. deren Sprühdüsen 1.5 und 1.10 sind so gerichtet, dass die austretenden Sprühstrahlen 2 sowohl auf die Aufzugsseile 3 wie auch auf die weichen Oberflächen 4.2 und 5.2 der Verteilrollen 4 und 5 auftreffen.

Die vorstehend beschriebene Einrichtung arbeitet wie folgt: Die Seilschmiereinrichtung wird an einem geeigneten Ort, beispielsweise auf dem Maschinenrahmen bei den vorbeigehenden Aufzugsseilen 3 oder bei einer Seildurchgangsöffnung im Machinenraum plaziert und fixiert. Es werden dann die für den jeweiligen Anwendungsfall benötigten Sprührohre 1.4 und 1.5 in die Dreh-Steck-Verbindungen eingesetzt und fixiert. Zu den Sprührohren ist zu bemerken, dass ein Sortiment verschiedener Sprührohre 1.4 und 1.5 zur Abdeckung der gängigsten Anwendungsfälle vorhanden sind. Diese weisen verschiedene Längen und verschiedene Anordnung und Anzahl von Sprühdüsen 1.5 und 1.6 auf. Im vorliegenden einfacheren Fall sind nur drei Aufzugsseile 3 vorhanden und die entsprechenden Sprührohre 1.3 und 1.4 eingesetzt. Am Anschluss-Stutzen 1.1 wird mit einem Schlauch eine nicht nicht dargestellte übliche, mit Schmieröl gefüllte, beispielsweise "Gardena"-Gartendruckspritze angeschlossen. Der Schmiervorgang selbst geht so vor sich, dass die Seile mit kleiner Geschwindigkeit, vorzugsweise in Ab-Richtung, durch die Vorrichtung bewegt werden und gleichzeitig die Druckspritze dosiert betätigt wird. Der bzw. die austretenden Sprühstrahlen benetzen die Aufzugsseile 3 und die weichen Oberflächen 4.2 und 5.2 der Verteilrollen 4 und 5. Die weichen Oberflächen 4.2 und 5.2 der Verteilrollen 4 und 5 können, je nach Bedarf, aus Lammfell, Faserplüsch, Kunststoff-Flies, Mollton, Schaumstoff, Frotté-Stoff oder feinen Borsten bestehen. Das vorder- und rückseitige Aufsprühen ergibt eine örtliche Anhäufung des Schmierstoffes auf der Vorder- und Rückseite der Aufzugsseile 3. Das anschliessende Durchfahren der Aufzugsseile 3 durch die mitdrehenden und ebenfalls mit Schmierstoff benetzten Verteilrollen 4 und 5 bewirkt dessen gleichmässige Verteilung am ganzen Umfang der Aufzugsseile 3, womit eine qualitativ optimale Schmierung stattfindet. Die beschriebene Einrichtung eignet sich nicht nur für das Auftragen von Schmierölen sondern auch für das Auftragen von Schmierfetten. Für diese Anwendung wird eine Sprühgabelgeometrie vorgeschlagen, welche einen kleineren Abstand zwischen Sprühdüsen 1.5/1.10 und den Aufzugsseilen 3 aufweist. Ferner wird dann anstelle einer Druckspritze eine kontinuierlich arbeitende Fettpresse am Anschluss-Stutzen 1.1 angeschlossen. Eine weitere Anwendungsmöglichkeit der Einrichtung besteht darin, dass mit nur einem Sprührohr 1.4 und nur einer Verteilwalze 4 und mit entsprechend angepassten Supports 6 und 7 und entsprechendem Zuführ-Rohrstück 1.2 beliebige, sich linear bewegende oder rotierende Maschinenteile mit Schmieröl oder Schmierfett geschmiert werden können. Ferner kann die Schmierstoffzuführung aus einem beliebigen Behälter mittels motorisch angetriebener Pumpe erfolgen.

## Patentansprüche

1. Seilschmiereinrichtung in der Form eines fest oder temporär installierten Schmierstoffsprühapparates mit welchem mittels eines kontinuierlich ablaufenden Prozesses unter Druck ein Schmierstoff an Aufzugsseile gesprüht und verteilt wird,
dadurch gekennzeichnet,
dass die Seilschmiereinrichtung in der Form einer Sprühgabel (1) mit mindestens je einer Sprühdüse (1.5/1.10) versehene, je vorn und hinter Aufzugsseilen (3) angeordnete, in Dreh-Steck-Verbindungen (1.6/1.8) mit einem Zuführ-Rohrstück (1.2) mit Anschluss-Stutzen (1.1) verbundene Sprührohre (1.3/1.4) aufweist und wobei in, die Sprühgabel (1) via Rohrclipse (8/9) haltenden Supporten (6/7) in Schlitzen (7.1/7.2, 6.1/6.2) verschiebbare, den aufgesprühten Schmierstoff verteilende Oberflächen (4.2/5.2) aufweisende Verteilrollen (4,5) vorhanden sind.

2. Seilschmiereinrichtung nach Anspruch 1
dadurch gekennzeichnet,
dass die Oberflächen (4.2/5.2) der Verteilrollen (4/5) eine, beim Zustellen und Andrücken an die Aufzugsseile (3) diese umschliessende, elastisch nachgiebige und saugfähige Beschaffenheit aufweisen.

## Claims

1. Cable lubricating equipment in the form of a permanently or temporarily installed lubricant spray apparatus by which a lubricant is sprayed and distributed on lift cables by means of a continuously elapsing process under pressure, characterised thereby that the cable lubricating equipment, in the form of a spray fork (1), has spray pipes (1.3/1.4), which are each provided with at least one spray nozzle (1.5/1.10), are respectively arranged in front of and behind lift cables (3) and are connected in rotary plug connections (1.6/1.8) with a feed pipe piece (1.2) with a connecting stub pipe (1.1), and wherein distributing rollers (4, 5), which are displaceable in slots (7.1/7.2, 6.1/6.2) in supports (6/7) holding the spray fork (1) via pipe clips (8/9) and which have surfaces (4.2/5.2) distributing the sprayed-on lubricant, are present.

2. Cable lubricating equipment according to claim 1, characterised thereby that the surfaces (4.2/5.2) of the distributing rollers (4/5) have an elastically flexible and absorbent state embracing the lift cables (3) on moving up to and pressing against these.

## Revendications

1. Dispositif de lubrification de câbles se présentant sous la forme d'un pulvérisateur de lubrifiant installé à demeure ou temporairement, avec lequel un lubrifiant est pulvérisé sous pression et réparti sur des câbles d'ascenseur à l'aide d'une opération continue,
caractérisé en ce que le dispositif de lubrification de câbles comporte, sous la forme d'une fourche de pulvérisation (1), des tuyaux de pulvérisation (1.3/1.4) pourvus d'au moins une buse de pulvérisation (1.5/1.10) disposés devant et derrière les câbles d'ascenseur (3) et reliés dans des liaisons par rotation et par emboîtement (1.6/1.8) à une pièce tubulaire d'amenée (1.2) pourvue d'une tubulure de raccordement (1.1), et il est prévu, dans des supports (6/7) qui maintiennent la fourche de pulvérisation (1) par l'intermédiaire de clips pour tuyaux (8/9), des rouleaux répartiteurs (4, 5) mobiles dans des fentes (7.1/7.2, 6.1/6.2) et présentant des surfaces (4.2/5.2) qui répartissent le lubrifiant pulvérisé.

2. Dispositif de lubrification de câbles selon la revendication 1, caractérisé en ce que les surfaces (4.2/5.2) des rouleaux répartiteurs (4/5) ont une structure élastique et absorbante qui entoure les câbles d'ascenseur (3) lorsqu'elles sont approchées de ceux-ci et pressées contre eux.
